# EUROPÄISCHE PATENTSCHRIFT

(11) **EP 3 621 778 B1**
(45) Veröffentlichungstag und Bekanntmachung des Hinweises auf die Patenterteilung: **04.05.2022**
(21) Anmeldenummer: 18727700.9
(22) Anmeldetag: 11.05.2018
(51) Int. Cl.: B29B 17/04, B29K 105/06

(54) **VERFAHREN ZUR WIEDERAUFBEREITUNG VON FASERVERBUNDWERKSTOFFEN**
METHOD FOR RECYCLING FIBER-REINFORCED COMPOSITE MATERIALS
PROCÉDÉ DE RECYCLAGE DE MATÉRIAUX COMPOSITES EN FIBRES

(30) Priorität: 11.05.2017 DE 102017110281
(43) Veröffentlichungstag der Anmeldung: 18.03.2020
(73) Patentinhaber: Schäfer Elektrotechnik U. Sondermaschinen GmbH, 67308 Rüssingen (DE); Carbon-Werke Weissgerber GmbH&Co. KG, 86757 Wallerstein (DE)
(72) Erfinder: SCHÄFER, Ralf, 67308 Rüssingen (DE); WEISSGERBER, Franz, 86757 Wallerstein (DE)
(74) Vertreter: Reiser & Partner Patentanwälte mbB
(86) Internationale Anmeldenummer: PCT/EP2018/062249
(87) Internationale Veröffentlichungsnummer: WO 2018/206788

(56) Entgegenhaltungen:
- EP-A1- 1 892 072
- EP-A1- 2 764 970
- WO-A1-2018/078050
- WO-A2-2011/116030
- US-A- 5 681 194

## Beschreibung

Die Erfindung betrifft ein Verfahren zur Wiederaufbereitung von Faserverbundwerkstoffen, bei welchem Elemente enthaltend Faserverbundwerkstoff durch mechanische Beanspruchung zerkleinert werden.

Faserverbundwerkstoffe enthalten als wesentlichen Bestandteil ein Fasermaterial. Dieses liegt häufig in Form von Laminaten vor, beispielsweise in Form von Geweben, Gelegen oder Matten. Das Fasermaterial ist in eine Matrix eingebettet, welche häufig aus polymerem Material, beispielsweise einem Duromer wie Kunstharz besteht. Faserverbundwerkstoffe werden in den verschiedensten Produkten verarbeitet und kommen als Formteile oder Strukturbauteile beispielsweise im Schiffsbau sowie in der Luft- und Raumfahrttechnik zum Einsatz. Des Weiteren umfassen Rotorblätter für Windräder häufig Strukturbauteile aus Faserverbundwerkstoffen.

Aus Faserverbundwerkstoffen hergestellte Strukturbauteile weisen eine begrenzte Lebensdauer auf. So ist es beispielsweise aufgrund der Materialermüdung erforderlich, Rotorblätter von Windkraftanlagen nach etwa 10 Jahren auszutauschen. Ein Austausch erfolgt aber bereits vorzeitig, wenn Rotorblätter mit anderen Geometrien montiert werden sollen. Aufgrund der großen Mengen an Faserverbundwerkstoffen besteht das Bedürfnis, das Material einer Wiederverwertung zuzuführen.

Hierbei ist jedoch problematisch, dass bei Einsatz einer Matrix aus duromerem Werkstoff wie Kunstharz kein reversibles Aufschmelzen der Matrix möglich ist.

Insofern wurden aus Faserverbundwerkstoff bestehende Elemente bislang beispielsweise derart zerkleinert, dass der Faserverbundwerkstoff in Form eines Pulvers vorliegt. Ein derartiges Verfahren ist beispielsweise aus der EP 0 473 990 A2 bekannt. Das Verfahrensergebnis, ein Pulver, wird dann als Zuschlagstoff zur Herstellung neuer Formteile verwendet. Hierbei ist nachteilig, dass der Zuschlagstoff vorwiegend als Füllmaterial dient und nicht zu einer Verbesserung der Materialeigenschaften führt. Das Dokument WO2018078050 (Stand der Technik unter Artikel 54(3) EPÜ) offenbart ein Verfahren zum Zerkleinern von Getränkeverpackungen aus Verbundmaterial in einem Prallreaktor, bei welchem Verbundmaterial über eine Einfüllöffnung in einen Prallreaktorraum gegeben wird, in dem Prallreaktorraum unter Einwirkung des Rotors zerkleinert und über eine Entnahmeöffnung aus dem Prallreaktorraum ausgeschleust wird.

Der Erfindung liegt die Aufgabe zugrunde, ein Verfahren zur Wiederverwertung von Faserverbundwerkstoffen zu entwickeln, dessen Verfahrensergebnis Zerkleinerungsprodukte sind, die einer hochwertigen Weiterverwendung zuführbar sind.

Diese Aufgabe wird mit den Merkmalen von Anspruch 1 gelöst. Auf vorteilhafte Ausgestaltungen nehmen die Unteransprüche Bezug.

Bei dem erfindungsgemäßen Verfahren zur Wiederaufbereitung von Faserverbundwerkstoffen werden Elemente enthaltend Faserverbundwerkstoff in einen Prallreaktor gegeben und durch mechanische Beanspruchung zerkleinert, wobei die Zerkleinerung derart erfolgt, dass als Zerkleinerungsprodukt Fasernadeln mit anhaftender Matrix entstehen.

Aus dem Stand der Technik war es bislang bekannt, Elemente, also Produkte oder Bauteile enthaltend Faserverbundwerkstoff entweder derart zu zerkleinern, dass das Zerkleinerungsprodukt ein Pulver ist. Alternativ wurde versucht, die Matrix vollständig von den Fasern zu trennen. Dabei ist jedoch problematisch, dass die Beschichtung, mit welcher die Fasern vorbehandelt sind, um eine Anhaftung der Matrix zu ermöglichen, dabei entfernt wird und erneut aufgebracht werden muss. Darüber hinaus ist das Verfahren sehr aufwendig, da Fasermaterial und Matrix einen sehr festen Verbund eingehen. Ferner ist problematisch, dass die so vereinzelten Fasern nicht mehr die ursprüngliche Festigkeit des ursprünglichen Fasermaterials erreichen.

Im Gegensatz zu den aus dem Stand der Technik bekannten Verfahren ist es erfindungsgemäß gewünscht, dass an dem zerkleinerten Fasermaterial, den Fasernadeln, Matrix anhaftet. Das Verfahrensergebnis, also die Zerkleinerungsprodukte sind demnach nadelförmige Faserelemente, bestehend aus Fasern oder Faserbündeln, welche mit Matrix ummantelt sind. Insofern wird sowohl das Fasermaterial als auch die Matrix des Ausgangsmaterials der Wiederverwertung zugeführt.

Dabei erfolgt die Verfahrensführung vorzugsweise derart, dass sich an den Fasernadeln Bruchkanten mit unregelmäßiger Gestalt ergeben, welche das Anlagern neuer Matrix verbessern. Dementsprechend wird bei der Zerkleinerung der Faserverbund aufgebrochen und es werden Faseranteile zusammen mit der Matrix vereinzelt.

Vorzugsweise enthält das Zerkleinerungsprodukt Fasernadeln mit einer Faserlänge von 0,1 mm bis 20 mm. Dabei kann eine Fraktion auch Fasernadeln mit größerer oder kleinerer Faserlänge enthalten. Vorzugsweise beträgt die Faserlänge von 90 Gew.% einer Fraktion von Zerkleinerungsprodukten von 0,1 mm bis 20 mm. Besonders bevorzugt enthält das Zerkleinerungsprodukt Fasernadeln mit einer Faserlänge von 1 mm bis 10 mm. Aus einer Fraktion von Elementen, welche in dem Prallreaktor zerkleinert werden, entstehen demnach Fasernadeln mit anhaftender Matrix in unterschiedlichen Faserlängen, wobei die Faserlänge von 1 mm bis 10 mm beträgt. Das Zerkleinerungsprodukt ist schüttfähig und kann in einem Mischer verarbeitet werden. Insofern kann das Zerkleinerungsprodukt, die Fasernadeln, mit einfachen Mitteln weiterverarbeitet werden.

Das Ausgangsmaterial, die zu zerkleinernden Elemente, enthalten etwa 30 Gew.% bis Gew.% Matrix und 60 Gew.% bis 70 Gew.% Fasern.

Aus Fasernadeln der vorgenannten Länge können neue Formteile hergestellt werden, wobei sich durch willkürliches Ausrichten der Fasernadeln und einer gleichmäßigen Verteilung von Fasernadeln unterschiedlicher Länge zum einen ein isometrisches Festigkeitsverhalten und zum anderen eine überraschend hohe Festigkeit des neu hergestellten Formteils ergibt. Insofern kann das wiederaufbereitete Fasermaterial in Form der Fasernadeln einer hochwertigen Wiederverwendung zugeführt werden.

Zu einer Menge von Zerkleinerungsprodukten kann mittels Siebanalyse eine Sieblinie bestimmt werden. Dabei ist es beispielsweise denkbar, zu einer Fraktion zu zerkleinernder Elemente jeweils eine Siebanalyse durchzuführen und zu der zerkleinerten Fraktion die Sieblinie zu bestimmen.

Die Sieblinie zeigt die Verteilung der Faserlängen der zerkleinerten Fasernadeln der zerkleinerten Fraktion. Dadurch kann festgestellt werden, welche Faserlängenverteilung die Zerkleinerungsprodukte der zerkleinerten Fraktion aufweist.

Durch Mischen verschiedener Fraktionen, welche unterschiedliche Sieblinien aufweisen, ist es somit möglich, für eine Menge Zerkleinerungsprodukte eine vorgegebene Faserlängenverteilung herzustellen. Dies ermöglicht die Herstellung von Formteilen mit gleichbleibenden Produkteigenschaften. Darüber hinaus ist denkbar, für verschiedene Anwendungszwecke verschiedene Rezepturen anzugeben, welche eine bestimmte Faserlängenverteilung aufweisen sollen. Diese kann dann durch gezieltes Mischen von Fraktionen von Zerkleinerungsprodukten erzielt werden, welche eine verschiedene Faserlängenverteilung aufweisen.

Ein erfindungsgemäßer Prallreaktor weist einen zylindrischen Mantel auf, der an einer Stirnseite mit einem Boden und an der anderen Stirnseite mit einem Deckel versehen ist. Dem Boden ist ein rotierbar gelagerter Prallkörper zugeordnet. Der zylindrische Mantel, der Boden und der Deckel schließen einen Prallreaktorraum auf. Der Deckel ist mit einer Öffnung zum Aufnehmen der Elemente versehen. Der Prallkörper kann Ketten umfassen oder als Rotor ausgebildet sein, der mit Prallelementen versehen ist.

In dem Umfangsbereich des Prallreaktors können Auswurföffnungen angeordnet sein. Dabei sind die Auswurföffnungen vorzugsweise dem Mantel zugeordnet. Die Auswurföffnungen können mittels Klappen verschließbar sein. Die Auswurföffnungen ermöglichen das Ausschleusen der Zerkleinerungsprodukte.

Vorzugsweise sind die Auswurföffnungen so ausgestaltet, dass das Zerkleinerungsprodukt kontinuierlich aus dem Prallreaktor herausgeschleust werden kann. Hierbei ist vorteilhaft, dass die Verweilzeit des Faserverbundwerkstoffs in dem Prallreaktorraum nur sehr kurz ist, so dass die mechanische Einwirkung durch den Prallkörper begrenzt ist. Ein Ausschleusen der Zerkleinerungsprodukte erfolgt bereits, wenn die gewünschte Faserlänge erreicht ist. Hierbei ist vorteilhaft, dass ein Großteil der Matrix nach wie vor an den Fasern anhaftet und dass die das Zerkleinerungsprodukt bildenden Fasernadeln scharfe und unregelmäßige Bruchkanten aufweisen, welche das Anlagern neuer Matrix verbessert.

Die Auswurföffnungen können mit geschlitzten oder gelochten Abdeckblechen abgedeckt sein. Die geschlitzten oder gelochten Abdeckbleche ermöglichen einerseits einen kontinuierlichen Austrag der Zerkleinerungsprodukte und andererseits einen Austrag der Zerkleinerungsprodukte, sobald diese die gewünschte Faserlänge erreicht haben. Zum einen ist dadurch die Verweilzeit des Faserverbundmaterials in dem Prallreaktor sehr kurz und zum anderen können Fasernadeln mit einer großen Faserlänge aus dem Prallreaktor herausgeschleust werden.

Insofern erfolgt ein kontinuierliches Ausschleusen zerkleinerten Materials während der Zerkleinerung der Elemente. Die Zerkleinerungsprodukte verlassen den Prallreaktor unmittelbar dann, wenn diese soweit zerkleinert sind, dass diese durch die Abdeckbleche hindurchpassen.

Die Wahl der Abdeckbleche kann in Abhängigkeit einer zuvor durchgeführten Siebanalyse modifiziert werden. Dabei können die Abdeckbleche beispielweise hinsichtlich Durchmesser und Geometrie der Durchgangsöffnungen so gewählt werden, dass Fasernadeln mit einer gewünschten Faserlängenverteilung aus dem Prallreaktor ausgeschleust werden können.

Es können Abdeckbleche mit unterschiedlich dimensionierten Durchgangsöffnungen vorgesehen sein. Dadurch kann eine Trennung von Fasernadeln in Abhängigkeit der Faserlänge bereits beim Ausschleusen der Fasernadeln aus dem Prallreaktor erfolgen.

Sofern es wünschenswert ist, eine weitere Zerkleinerung durchzuführen, können die Abdeckbleche durch Abdeckklappen verschlossen werden.

Zusätzlich zu den Abdeckblechen können Auswurfklappen zum Auswerfen von Großteilen vorgesehen sein. Dies ist insbesondere dann vorteilhaft, wenn Verbundstoffe mit Materialkombinationen in dem Prallreaktor verarbeitet werden. Enthält der Verbundstoff sowohl Metallanteile als auch Faserverbundwerkstoff, wird der Faserverbundwerkstoff in Form der Fasernadeln während der Zerkleinerung kontinuierlich aus dem Prallreaktor ausgeschleust. Der Metallanteil kann anschließend über die Auswurfklappe entnommen werden.

Dem Prallreaktor kann eine Klassiereinrichtung zugeordnet sein. Diese kann sich unmittelbar an die Auswurföffnung anschließen. Die Klassiereinrichtung kann Siebe umfassen, welche eine Sortierung der Zerkleinerungsprodukte nach Faserlänge ermöglichen. Insofern kann nach dem Austritt der Zerkleinerungsprodukte aus der Auswurföffnung eine Siebanalyse durchgeführt werden bzw. die Fasern könne nach Faserlänge sortiert werden. Dies ermöglicht eine vorteilhafte Zusammenstellung von Fasern mit bestimmter Faserlänge. Die vorteilhafte gewählte Faserlängenverteilung kann auch durch die oben beschriebene Auswahl der Abdeckbleche erzielt werden. Daraus können besonders hochwertige neue Formteile hergestellt werden.

Das Fasermaterial kann Glasfasern, Kohlenstofffasern, Basaltfasern und/oder Aramidfasern enthalten. Aus Glasfasern oder Basaltfasern hergestellte Faserverbundwerkstoffe sind zwar preiswert, fallen aber auch in einer besonders großen Stückzahl an. Aus Kohlenstofffasern hergestellte Faserverbundwerkstoffe sind besonders kostenintensiv und schwierig in der Verarbeitung. Aufgrund der hohen Festigkeit war die Wiederaufbereitung derartiger Faserverbundwerkstoffe bislang schwierig. Es hat sich aber gezeigt, dass aus den Fasernadeln hergestellte Formkörper sehr gute Materialeigenschaften aufweisen, insbesondere wenn die Fasernadeln Kohlenstofffasern umfassen. Die das Zerkleinerungsprodukt bildenden Fasernadeln bestehen dabei aus Bündeln von Kohlenstofffasern, an welchen Matrix anhaftet.

Damit ein fester Verbund aus Matrix und Faser entstehen kann, werden Fasern mit einer Schlichte versehen. Insofern werden beispielsweise Glasfasern mit Glasfaserschlichten und Kohlenstofffasern mit Carbonfaserschlichten versehen. Die Schlichten lagern sich in Form einer Beschichtung an den Fasern an und verbessern die Haftfähigkeit gegenüber der Matrix. Die durch das erfindungsgemäße Verfahren hergestellten Fasernadeln enthalten Fasern mit anhaftender Schlichte und anhaftender Matrix. Insofern ist es nicht erforderlich, die Fasernadeln erneut mit einer Schlichte zu versehen. Die Fasernadeln können direkt in eine neue Matrix eingebettet und zu einem Formteil weiterverarbeitet werden. Dadurch, dass die ursprüngliche Schlichte an den Fasern anhaftet, ist eine feste Anbindung der neuen Matrix an die Fasern gewährleistet. Dadurch entstehen Formteile mit überraschend hohen Festigkeitswerten, obwohl wiederverwertetes Fasermaterial zum Einsatz kommt.

Die Elemente können vor der Zerkleinerung in dem Prallreaktor einer Vorzerkleinerung zugeführt werden. Durch die Vorzerkleinerung können aus großen Formteilen, beispielsweise aus Rotorblättern von Windkraftanlagen blockähnliche Elemente hergestellt werden, welche in einen Prallreaktor eingefüllt werden können. Die Vorzerkleinerung kann beispielsweise durch Sägen oder Wasserstrahlschneiden erfolgen. Die durch die Vorzerkleinerung entstehenden Elemente können dann mittels herkömmlicher Fördereinrichtungen wie beispielsweise Förderbänder transportiert werden und sind schüttfähig.

Nach einer vorteilhaften Ausgestaltung kann das Zerkleinerungsprodukt mit neuer Matrix vermischt und zu Formteilen verarbeitet werden. Die Fasernadeln, welche durch das erfindungsgemäße Verfahren hergestellt werden sind rührfähig und können beispielsweise in einem herkömmlichen Rührer oder Mischer verarbeitet werden. Durch Bestimmung der Sieblinie ist es möglich, eine Faserzusammenstellung mit einer bestimmten Faserlängenverteilung zur Verfügung zu stellen, so dass Formteile mit gewünschten mechanischen Eigenschaften herstellbar sind.

Ein Formkörper enthält Fasernadeln, welche durch das zuvor beschriebene Verfahren erhältlich sind und Matrix. Die Matrix ist vorzugsweise aus duromerem Material, beispielsweise einem Kunstharz ausgebildet. Dazu werden Fasernadeln mit flüssiger Matrix vermischt und zu einem Formteil, beispielsweise zu Plattenware weiterverarbeitet. Die Weiterverarbeitung erfolgt beispielsweise mittels Pressen und durch Einwirkung von Wärme. Dabei härtet die Matrix aus und es bildet sich ein fester Verbund von Fasernadeln und Matrix. Die Fasernadeln können eine vorgewählte Faserlängenverteilung aufweisen. Dabei kann die Auswahl der Fasernadeln mittels zuvor durchgeführter Siebanalyse vorgenommen werden.

Durch das Mischen der Fasern mit der Matrix und dem Weiterverarbeiten in einer Presse ergibt sich eine gleichmäßige Verteilung und Ausrichtung der Fasernadeln. Dadurch weist das neu hergestellte Formteil isometrische Festigkeitseigenschaften auf. Durch Verwendung von Fasernadeln unterschiedlicher Faserlänge können sich in Zwischenräumen zwischen längeren Fasernadeln kürzere Fasernadeln anlagern. Darüber hinaus werden auch pulverförmige Zerkleinerungsprodukte verarbeitet, welche bei der erfindungsgemäßen Zerkleinerung ebenfalls entstehen können. Hierbei ist vorteilhaft, dass sich durch die dichte Anordnung der Fasernadeln ein mechanisch fester Verbund ergibt und dass nur eine geringe Menge neuer Matrix erforderlich ist, um Formteile herzustellen.

Das Ausgangsprodukt weist vor der Zerkleinerung etwa 30 Gew.% bis 40 Gew.% Matrix und 60 Gew.% bis 70 Gew.% Fasermaterial auf. Das aus den zerkleinerten Fasernadeln neu hergestellte Formteil weist 45 Gew.% bis 55 Gew.%, vorzugsweise 50 Gew.% Matrix auf. Insofern enthält das neue Formteil eine verhältnismäßig geringe Menge neu hinzugefügter Matrix. Die Menge der neu hinzugefügten Matrix beträgt lediglich 10 Gew.% bis 20 Gew.%. Insofern weist das Formteil, welches aus Fasernadeln hergestellt ist, nach wie vor einen sehr hohen Faseranteil auf, aus welchem die hohe Festigkeit resultiert.

Das erfindungsgemäße Verfahren wird nachfolgend anhand der Figur näher erläutert. Diese zeigt schematisch:

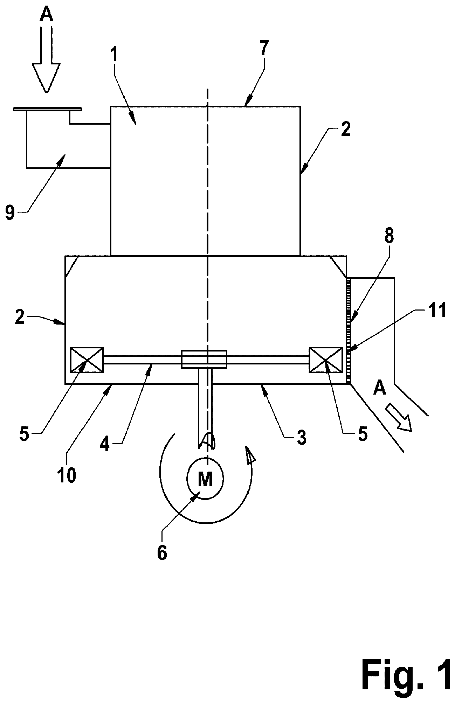

Fig. 1 einen Prallreaktor zur Durchführung des erfindungsgemäßen Verfahrens.

Figur 1 zeigt einen Prallreaktor 1, beziehungsweise eine Prallreaktoranordnung zum Zerkleinern von Elementen, welche Faserverbundmaterial enthalten.

Das Ausgangsmaterial sind beispielsweise Rotorblätter von Windkraftanlagen, welche Strukturbauteile in Form von eingebetteten Profilen aus Faserverbundmaterial aus Kohlenstofffasern aufweisen. Derartige Rotorblätter können eine Länge von 60 m aufweisen. Damit das Material dem Prallreaktor 1 zuführbar ist, erfolgt zunächst eine Vorzerkleinerung der Rotorblätter, bei welcher blockähnliche Elemente entstehen. Die Vorzerkleinerung erfolgt mittels Sägen.

Das Ausgangsprodukt weist vor der Zerkleinerung etwa 35 Gew.% Matrix und 65 Gew.% Fasermaterial in Form von Kohlenstofffasern auf. Die Matrix besteht aus duromerem Kunstharz und bildet mit den Kohlenstofffasern einen festen Verbund.

Der Prallreaktor 1 umfasst einen Boden 10 und einen zylindrischen Mantel 2 aus metallischem Material. Im Bodenbereich, im Inneren des Mantels 2 ist ein Rotor 3 angeordnet, welcher mit Prallelementen 5 versehen ist. Der Rotor 3 ist mit einem Elektromotor 6 wirkverbunden, welcher außerhalb des Mantels 2 angeordnet ist. Die den Rotor 3 mit dem Elektromotor 6 verbindende Welle verläuft in Axialrichtung des zylindrischen Mantels 2. Der Rotor 3 ist mit Flügeln 4 versehen, welche radial von der Welle abragen. An den Enden der freien Flügel 4 sind Prallelemente 5 angeordnet. Die Prallelemente 5 sind auswechselbar an den Flügeln 4 befestigt.

Der Prallreaktor 1 ist an der vom Rotor abgewandten Stirnseite mit einem Deckel 7 verschlossen, so dass Boden 10, Mantel 2 und Deckel 7 einen Prallreaktorraum einschließen. Der Deckel 7 weist eine Einfüllöffnung 9 zum Einfüllen der Elemente auf. Der Mantel 2 ist ferner in Höhe des Rotors 3 mit einer Auswurföffnung 8 zum Ausschleusen der Zerkleinerungsprodukte versehen. In die Auswurföffnung 8 sind gelochte Abdeckbleche 11 eingesetzt. Die Abdeckbleche 11 bilden Siebe, welche Zerkleinerungsprodukte in der gewünschte Partikelgröße hindurchlassen.

Zum Zerkleinern werden die vorzerkleinerten Elemente über die Einfüllöffnung 9 in den Prallreaktorraum gegeben. Die Elemente werden unter Einwirkung des mit den Prallelementen 5 versehenen Rotors 3 zu Zerkleinerungsprodukten in Form von Fasernadeln zerkleinert und über die Auswurföffnung 8 aus dem Prallreaktorraum ausgeschleust. Die Entnahme des Zerkleinerungsproduktes aus dem Prallreaktorraum erfolgt bei der vorliegenden Ausgestaltung kontinuierlich. Die Fasernadeln werden demnach unmittelbar nach Erreichen der gewünschten Faserlänge ausgeschleust.

Alternativ kann die Auswurföffnung auch durch eine Klappe verschließbar sein, so dass die Vorrichtung auch für einen batchweisen Betrieb geeignet ist.

Die Zerkleinerungsprodukte in Form der Fasernadeln weisen eine Faserlänge von 0,1 mm bis 10 mm auf. Die Fasernadeln bestehen aus Fasermaterial und an dem Fasermaterial anhaftender Matrix. Das Fasermaterial besteht wiederum aus Faserbündeln und aus Schlichte, welche eine feste Anhaftung der Matrix an dem Fasermaterial ermöglicht. Insofern sind die Fasernadeln nach wie vor ein Verbundmaterial aus Fasermaterial und Matrix. Das Fasermaterial ist in die Matrix eingebettet, wobei die Fasernadeln aufgrund der Zerkleinerung scharfkantige und unregelmäßige Bruchkanten aufweisen, welche die Anhaftung neuer Matrix verbessert.

Nach der Zerkleinerung in dem Prallrektor 1 wird anhand einer Fraktion Fasernadeln eine Siebanalyse durchgeführt und eine Sieblinie bestimmt. Dadurch ist die Faserlängenverteilung der Fraktion bekannt und es kann durch Mischen verschiedener Fraktionen eine Mischung aus Fasernadeln mit vorgegebener Faserlängenverteilung hergestellt werden. Die Siebanalyse erfolgt durch Siebe der Fasernadeln in Sieben mit sinkender Maschenweite.

Zur Herstellung neuer Formteile werden Fasernadeln mit einer gewünschten Faserlängenverteilung mit neuer Matrix in einem Rührer vermischt. Die neue Matrix besteht vorzugsweise aus duromerem Kunstharz. Nach dem Vermischen erfolgt eine Formgebung in einer Presse. Dabei kann Wärme zugeführt werden. Nach dem Aushärten der neuen Matrix bildet sich das neue Formteil.

Das Verfahren eignet sich insbesondere zur Herstellung von Plattenware, Profilen oder dreidimensionalen Formteilen mit einem Faserverbund aus wiederaufbereiteten Fasernadeln. Das aus den zerkleinerten Fasernadeln neu hergestellte Formkörper weist insgesamt 50 Gew.% Matrix auf. Die Menge der neu hinzugefügten Matrix beträgt lediglich 15 Gew.%. Die Menge des Faseranteils beträgt 50 Gew.%. Die Faserlängen der hier verwendeten Fasernadeln beträgt 1 mm bis 10 mm.

Der Formkörper kann auch als mehrschichtiger Körper ausgebildet sein. Dabei umfasst zumindest eine Lage Fasernadeln. Der Formkörper kann als Sandwich geformt sein und neben Lagen aus Fasernadeln weitere Lagen aus Fasermaterial, beispielsweise in Form eines Gewebes aufweisen. Die Schicht mit Fasernadeln kann eine Mittelschicht bilden. Ein derartiger Formkörper hat eine besonders hohe Festigkeit und wertige Optik.

Vorteilhaft ist auch, dass auch ein Formkörper mit erfindungsgemäß hergestellten Fasernadeln erneut der Wiederaufbereitung zugeführt werden kann.

Die Fasernadeln können auch einen Zuschlag in elastomeren Artikeln, beispielsweise in Gummiartikeln wie Reifen und dergleichen bilden.

## Patentansprüche

1. Verfahren zur Wiederaufbereitung von Faserverbundwerkstoffen, bei welchem Elemente enthaltend Faserverbundwerkstoff in einen Prallreaktor (1) gegeben und durch mechanische Beanspruchung zerkleinert werden, wobei der Prallreaktor einen zylindrischen Mantel aufweist, der an einer Stirnseite mit einem Boden und an der anderen Stirnseite mit einem Deckel versehen ist, wobei dem Boden ein rotierbar gelagerter Prallkörper zugeordnet ist, wobei der zylindrische Mantel, der Boden und der Deckel einen Prallreaktorraum einschließen und wobei der Deckel mit einer Öffnung zum Aufnehmen der Elemente versehen ist, wobei die Zerkleinerung durch den Prallkörper derart erfolgt, dass als Zerkleinerungsprodukt Fasernadeln mit anhaftender Matrix entstehen.

2. Verfahren nach Anspruch 1, **dadurch gekennzeichnet, dass** das Zerkleinerungsprodukt Fasernadeln mit einer Faserlänge von 0,1 mm bis 20 mm enthält.

3. Verfahren nach Anspruch 1 oder 2, **dadurch gekennzeichnet, dass** zu einer Menge von Zerkleinerungsprodukten mittels Siebanalyse eine Sieblinie bestimmt wird.

4. Verfahren nach einem der Ansprüche 1 bis 3, **dadurch gekennzeichnet, dass** das Zerkleinerungsprodukt kontinuierlich aus dem Prallreaktor (1) herausgeschleust wird.

5. Verfahren nach einem der Ansprüche 1 bis 4, **dadurch gekennzeichnet, dass** der Prallreaktor (1) Auswurföffnungen (8) aufweist.

6. Verfahren nach Anspruch 5, **dadurch gekennzeichnet, dass** die Auswurföffnungen (8) mit geschlitzten oder gelochten Abdeckblechen (11) abgedeckt sind.

7. Verfahren nach einem der Ansprüche 1 bis 6, **dadurch gekennzeichnet, dass** die Faserverbundwerkstoffe Glasfasern, Kohlenstofffasern, Basaltfasern und/oder Aramidfasern enthalten.

8. Verfahren nach einem der Ansprüche 1 bis 7, **dadurch gekennzeichnet, dass** das Zerkleinerungsprodukt Kohlenstofffasern mit anhaftender Schlichte und anhaftender Matrix enthält.

9. Verfahren nach einem der Ansprüche 1 bis 8, **dadurch gekennzeichnet, dass** die Elemente vor der Zerkleinerung in den Prallreaktor (1) einer Vorzerkleinerung zugeführt werden.

10. Verfahren nach einem der Ansprüche 1 bis 9, **dadurch gekennzeichnet, dass** das Zerkleinerungsprodukt mit neuer Matrix vermischt und zu Formteilen verarbeitet wird.

## Claims

1. Method for recycling fibre composite materials, in which elements containing fibre composite material are passed into an impact reactor (1) and comminuted by mechanical stress, the impact reactor having a cylindrical casing which is provided with a base at one end face and with a cover at the other end face, a rotatably mounted impact body being assigned to the base, the cylindrical casing, the base and the cover enclosing an impact reactor space, and the cover being provided with an opening for receiving the elements, the comminution by the impact body taking place in such a way as to result in fibre needles with an adhesive matrix as a comminution product.

2. Method according to claim 1, **characterised in that** the comminution product contains fibre needles having a fibre length of 0.1 mm to 20 mm.

3. Method according to either claim 1 or claim 2, **characterised in that** a grading curve for a batch of comminution products is determined by sieve analysis.

4. Method according to any of claims 1 to 3, **characterised in that** the comminution product is channelled out of the impact reactor (1) continuously.

5. Method according to any of claims 1 to 4, **characterised in that** the impact reactor (1) has discharge openings (8).

6. Method according to claim 5, **characterised in that** the discharge openings (8) are covered by slotted or perforated metal cover sheets (11).

7. Method according to any of claims 1 to 6, **characterised in that** the fibre composite materials contain glass fibres, carbon fibres, basalt fibres and/or aramid fibres.

8. Method according to any of claims 1 to 7, **characterised in that** the comminution product contains carbon fibres with adhesive sizing and an adhesive matrix.

9. Method according to any of claims 1 to 8, **characterised in that** the elements are supplied into the impact reactor (1) for a preliminary comminution prior to the comminution.

10. Method according to any of claims 1 to 9, **characterised in that** the comminution product is mixed with fresh matrix and processed into shaped parts.

## Revendications

1. Procédé de recyclage de matériaux composites à base de fibres, dans lequel des éléments contenant un matériau composite à base de fibres sont introduits dans un réacteur à impacts (1) et sont broyés par sollicitation mécanique, le réacteur à impacts présentant une enveloppe cylindrique qui est pourvue d'un fond sur une face frontale et d'un couvercle sur l'autre face frontale, un corps d'impact monté rotatif étant associé au fond, l'enveloppe cylindrique, le fond et le couvercle renfermant une chambre de réacteur à impacts et le couvercle étant pourvu d'une ouverture pour recevoir les éléments, le broyage par le corps d'impact s'effectuant de telle sorte qu'il se forme comme produit de broyage des aiguilles de fibres avec une matrice adhérente.

2. Procédé selon la revendication 1, **caractérisé en ce que** le produit de broyage contient des aiguilles de fibres ayant une longueur de fibres de 0,1 mm à 20 mm.

3. Procédé selon la revendication 1 ou 2, **caractérisé en ce qu'**une courbe granulométrique est déterminée par analyse granulométrique pour une quantité de produits de broyage.

4. Procédé selon l'une des revendications 1 à 3, **caractérisé en ce que** le produit de broyage est évacué en continu du réacteur à impacts (1).

5. Procédé selon l'une des revendications 1 à 4, **caractérisé en ce que** le réacteur à impacts (1) présente des ouvertures d'éjection (8).

6. Procédé selon la revendication 5, **caractérisé en ce que** les ouvertures d'éjection (8) sont recouvertes de plaques de recouvrement (11) fendues ou perforées.

7. Procédé selon l'une des revendications 1 à 6, **caractérisé en ce que** les matériaux composites à base de fibres contiennent des fibres de verre, des fibres de carbone, des fibres de basalte et/ou des fibres d'aramide.

8. Procédé selon l'une des revendications 1 à 7, **caractérisé en ce que** le produit de broyage contient des fibres de carbone avec un ensimage adhérent et une matrice adhérente.

9. Procédé selon l'une des revendications 1 à 8, **caractérisé en ce que** les éléments sont soumis à un pré-broyage avant d'être broyés dans le réacteur à impacts (1).

10. Procédé selon l'une des revendications 1 à 9, **caractérisé en ce que** le produit de broyage est mélangé à une nouvelle matrice et transformé en pièces moulées.
